(19) Europäisches Patentamt
European Patent Office
Office européen des brevets

(11) **EP 3 559 613 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(51) Int Cl.:
**G01F 23/284** (2006.01)  **G01S 13/88** (2006.01)
**G01S 7/02** (2006.01)

(21) Anmeldenummer: **17804526.6**

(22) Anmeldetag: **22.11.2017**

(86) Internationale Anmeldenummer:
**PCT/EP2017/080049**

(87) Internationale Veröffentlichungsnummer:
**WO 2018/114186 (28.06.2018 Gazette 2018/26)**

(54) **TEMPERATURBESTÄNDIGES FÜLLSTANDSMESSGERÄT**

TEMPERATURE-RESISTANT FILL LEVEL MEASUREMENT DEVICE

APPAREIL DE MESURE DE NIVEAU DE REMPLISSAGE THERMORÉSISTANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2016 DE 102016124982**

(43) Veröffentlichungstag der Anmeldung:
**30.10.2019 Patentblatt 2019/44**

(73) Patentinhaber: **Endress+Hauser SE+Co. KG**
**79689 Maulburg (DE)**

(72) Erfinder: **FEISST, Klaus**
**79252 Stegen (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**WO-A1-2009/129997   WO-A2-2011/020668**
**US-A1- 2002 053 238   US-A1- 2005 253 751**
**US-A1- 2008 134 778   US-A1- 2009 302 867**

**Beschreibung**

Die Erfindung betrifft ein Radar-basiertes Füllstandsmessgerät zur Messung eines Füllstandes eines in einem Behälter befindlichen Füllgutes, wobei das Füllstandsmessgerät auch bei hohen im Behälter herrschenden Temperaturen eingesetzt werden kann.

In der Automatisierungstechnik, insbesondere in der Prozessautomatisierungstechnik, werden vielfach Feldgeräte eingesetzt, die zur Erfassung und/oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, usw. zum Einsatz kommen. Sie erfassen die entsprechenden Prozessvariablen, wie Füllstand, Durchfluss, Druck, Temperatur, pH-Wert, Redoxpotential oder Leitfähigkeit. Eine Vielzahl dieser Feldgeräte wird von der Firma Endress + Hauser hergestellt und vertrieben.

Zur Füllstandsmessung bei Füllgütern in Behältern haben sich berührungslose Messverfahren etabliert, da sie robust und wartungsarm sind. Ein weiterer Vorteil berührungsloser Messverfahren besteht in ihrer Fähigkeit, den Füllstand quasi kontinuierlich, also mit einer hohen Auflösung messen zu können. Aus diesem Grund werden hierzu vorwiegend Radar-basierte Messverfahren eingesetzt. Etablierte Messprinzipien bilden hierbei das FMCW-Messprinzip ("Frequency Modulated Continuos Wave") oder auch das so genannte Puls-Laufzeit-Verfahren. In beiden Fällen wird das hochfrequente elektromagnetische Signal über eine Antenne, die am Behälter befestigt ist und in das Innere des Behälters gerichtet ist, in Richtung des Füllgutes gesendet. Dabei liegen die Frequenzen der ausgesendeten elektromagnetischen Wellen im Bereich einer standardisierten Mittenfrequenz. Bedingt durch behördliche Zulassungsvorschriften werden hier in der Regel Frequenzen bei 6 GHz, 26 GHz, oder 79 GHz verwendet. Das Funktionsprinzip des Puls-Laufzeit-Verfahrens wird beispielsweise in der Veröffentlichungsschrift DE 10 2010 063 430 A1 genannt. Zum Funktionsprinzip des FMCW-Messprinzips sei exemplarisch auf die Veröffentlichungsschrift WO 2012/139852 A1 hingewiesen. Unabhängig vom Messprinzip sind jedoch höhere Frequenzen vorteilhaft, da mit steigender Frequenz potentiell auch die Auflösung der Füllstandsmessung steigt.

Je nach Einsatzgebiet des Behälters können im Behälter-Inneren Temperaturen von bis zu 200 °C vorherrschen. In diesem Fall besteht eine besondere Herausforderung darin, das Füllstandsmessgerät thermisch vom Behälter-Inneren zu isolieren, da die elektronischen Komponenten des Feldgerätes üblicherweise lediglich bis zu ungefähr einer Temperatur von 80 °C ausgelegt sind. Die thermische Isolation der elektronischen Komponenten erfolgt daher oftmals über einen thermisch isolierenden Gehäusehals mit hohem thermischem Widerstand, der zwischen der Antenne und dem Gehäuse, welches sich außerhalb des Behälters befindet, angeordnet ist. Ein entsprechendes Füllstandsmessgerät ist beispielsweise in der Veröffentlichungsschrift DE102009028620 A1 offenbart. Dabei befinden sich die elektronischen Komponenten in dem Gehäuse. Entsprechend diesem Zweck ist der Gehäusehals mit einer gewissen Mindestlänge sowie einer entsprechend geringen Querschnittsfläche bemessen, damit sich ein möglichst hoher thermischer Widerstand zwischen der Antenne und dem Gehäuse einstellt. Als weitere Maßnahmen zur Erhöhung des thermischen Widerstandes ist außerdem bekannt, ein thermisch isolierendes Element, beispielsweise einen Keramik-Körper in das Innere des Gehäusehalses einzusetzen.

Hin zu hohen Radar-Frequenzen (wobei unter hoch im Sinne der Erfindung bereits Frequenzen unterhalb von 79 GHz zu verstehen sind) ist es aus Gründen einer ausreichenden Signalübertragung zur Antenne hin jedoch nicht mehr möglich, die elektronischen Baugruppen für die Hochfrequenz-Signalerzeugung entfernt von der Antenne anzuordnen: Daher muss in diesen Fällen von einem (langen) Gehäusehals abgesehen werden.

Der Erfindung liegt daher die Aufgabe zugrunde, ein Füllstandsmessgerät bereitzustellen, welches bei hohen im Behälter herrschenden Temperaturen eingesetzt werden kann.

Die Erfindung löst diese Aufgabe durch ein Radar-basiertes Füllstandsmessgerät zur Messung eines Füllstandes (L) eines in einem Behälter befindlichen Füllgutes. Hierzu umfasst es:

- Ein Gehäuse,
- eine Antenne, die derart ausgestaltet und am Behälter angeordnet ist, um elektromagnetische Wellen ($S_{HF}$) in Richtung des Füllgutes auszusenden und/oder um im Behälter reflektierte elektromagnetische Wellen (EHF) zu empfangen,
- einen Gehäusehals, der zwischen dem Gehäuse und der Antenne angeordnet ist, wobei der Gehäusehals zwischen dem Gehäuse und der Antenne einen vordefinierten thermischen Widerstand ($R_{th,G}$) aufweist,
- zumindest eine teilweise im Gehäusehals angeordnete Elektronik-Baugruppe.

Der Gehäusehals zeichnet sich erfindungsgemäß dadurch aus, dass der thermische Widerstand ($R_{th,G}$) des Gehäusehalses so bemessen ist, um bei einer Temperatur ($T_B$) nahe der Antenne im Behälter (bzw.) von mindestens 200° C die Temperatur ($T_E$) an der Elektronik-Baugruppe auf höchstens 80° C zu begrenzen. Dementsprechend ist der thermische Widerstand ($R_{th,G}$) mit kleiner als 15 Kelvin pro Watt, insbesondere kleiner als 10 Kelvin pro Watt zu bemessen. Hierzu ist der Gehäusehals vorzugsweise aus einem thermisch leitfähigen Material, insbesondere aus Edelstahl, Aluminium oder Kupfer gefertigt. Von diesen Materialien weist Kupfer den größten Wärmeleitkoeffizient auf. Dadurch kann eine sehr kompakte Ausgestaltung des erfindungsgemäßen Gehäusehalses erreicht werden. Edelstahl hingegen weist unter den genannten Materialien die höchste mechanische und chemische Beständigkeit auf und kann daher vorzugsweise verwendet werden, wenn das Füllstandsmessgerät aggressiven Umgebungsbedingungen ausgesetzt ist.

Im Rahmen der Erfindung ist der thermische Widerstand ($R_{th,G}$) definiert als:

$$R_{th,G} = \frac{1}{\lambda_G} * \frac{l_G}{A_G}.$$

Dabei ist $l_G$ die Länge des Gehäusehalses und $A_G$ dessen Querschnittsfläche. $\lambda_G$ ist der Wärmeleitkoeffizient des verwendeten Gehäusematerials mit der Einheit $\left[\frac{W}{mK}\right]$.

Durch die erfindungsgemäße Anordnung der Elektronik-Baugruppe im Gehäusehals wird somit ein temperaturbeständiges Füllstandsmessgerät bereitgestellt, welches auch im Bereich hoher Radar-Frequenzen eingesetzt werden kann. Dadurch kann eine verbesserte Genauigkeit bei der Füllstandsmessung erzielt werden, als es mit vergleichbaren Füllstandsmessgeräten nach dem Stand der Technik möglich ist. Die Temperatur-Beständigkeit des Füllstandsmessgerätes wird erfindungsgemäß bewirkt, indem entgegen dem allgemeinen Fachwissen der Gehäusehals mit einem verringerten thermischen Widerstand ($R_{th,G}$) ausgelegt wird und dadurch die Temperatur ($T_E$) an der Elektronik-Baugruppe auf deutlich unter 80 °C reduziert werden kann. Durch die erhöhte Wärmeleitfähigkeit im Gehäusehals werden die unterhalb der Elektronik-Baugruppe befindlichen Gehäusehals- und Antennen-Komponenten thermisch gut an das als Kühlkörper wirkende eigentliche Gehäuse angekoppelt und dadurch die Konvektionsströme von der gegebenenfalls heißen Antenne über die Elektronik-Baugruppe zum Gehäuse minimiert. Eine geringe Erhöhung der Temperatur im eigentlichen Gehäuse ist hierbei unkritisch.

Neben dem verwendeten Gehäusematerial kann der thermische Widerstand des Gehäusehalses entsprechend der oben genannten Formel durch seine geometrische Auslegung, insbesondere die Querschnittsgeometrie, die Länge ($l_G$), den mittleren Außendurchmesser ($D_G$) und die mittlere Wandstärke ($d_G$) beeinflusst werden. In einer vorteilhaften Form der Erfindung weist der Gehäusehals daher vorzugsweise einen in etwa runden Querschnitt mit einem entsprechenden Außendurchmesser ($D_G$) und einer Wandstärke ($d_G$) auf. Die Querschnittsfläche $A_G$ bemisst sich in diesem Fall zu

$$A_G = \pi(D_G d_G - d_G^2).$$

Hierbei sieht eine Weiterbildung des erfindungsgemäßen Füllstandsmessgerätes vor, dass der Gehäusehals für den Fall, dass dieser aus Edelstahl $\left(\lambda_G = 15\,\frac{W}{mK}\right)$ gefertigt ist, eine mittlere minimale Wandstärke ($d_G$) von 4 mm aufweist. Des Weiteren ist es bezüglich des Außendurchmessers ($D_G$) vorteilhaft, wenn der Gehäusehals im Fall von Edelstahl einen maximalen mittleren Außendurchmesser ($D_G$) von 80 mm aufweist. Darüber hinaus ist es möglich, einen erfindungsgemäß geringen thermischen Widerstand ($R_{th,G}$) zu erreichen, indem der Gehäusehals für den Fall, dass der Gehäusehals aus Edelstahl gefertigt ist, eine maximale Länge ($l_G$) von 140 mm aufweist. Im Falle solch einer Auslegung ($d_G$ = 4 mm, $D_G$ = 80 mm, $l_G$ = 140 mm, $\lambda_G = 15\,\frac{W}{mK}$, bei runder Querschnittsfläche $A_G$) resultiert nach den zuvor genannten Formeln ein thermischer Widerstand ($R_{th,G}$) von ca. 9.78 Kelvin pro Watt.

Dieses Dimensionierungsbeispiel verdeutlicht einen zusätzlichen Vorteil: Durch die erfindungsgemäße Idee kann der Gehäusehals, und somit das gesamte Füllstandsmessgerät, wesentlich kompakter realisiert werden, als es nach dem Stand der Technik möglich ist.

Zu einer weiterhin verbesserten thermischen Entkopplung der elektronischen Baugruppe vom Gehäusehals und einer damit verbundenen weiteren Temperatursenkung an der elektronischen Baugruppe weist der Gehäusehals in einer Weiterbildung der Erfindung eine Innenwand mit einer thermisch isolierenden Schicht auf. Hierbei kann es sich um eine Wand-Beschichtung handeln. Möglich ist jedoch auch die Verwendung eines Kunststoff- oder Keramik-Einsatzes. Im Falle von Kunststoff kann insbesondere PPS (Polyphenylensulfid) verwendet werden. Zum gleichen Zweck ist es außerdem von Vorteil, wenn im Gehäusehals zwischen der Elektronik-Baugruppe und der Antenne ein thermisches Isolationselement angeordnet ist.

Die Verbindung des Gehäusehalses zur Antenne bzw. zum Gehäuse ist im einfachsten Fall unlösbar und dementsprechend einteilig ausgestaltet. Alternativ ist es jedoch vorzugsweise möglich, dass die Antenne und/oder das Gehäuse über zumindest eine lösbare Verbindung mit dem Gehäusehals verbunden sind/ist. In diesem Fall ist es zwecks weiterer Verringerung des thermischen Widerstandes ($R_{th,G}$) von Vorteil, eine Wärmeleitpaste an der zumindest einen lösbaren Verbindung vorzusehen.

Anhand der nachfolgenden Figuren wird die Erfindung näher erläutert. Es zeigt:

Fig. 1: Eine schematische Darstellung eines erfindungsgemäßen Füllstandsmessgerätes an einem Behälter,

Fig. 2: eine detaillierte Darstellung eines erfindungsgemäßen Füllstandsmessgerätes, und

Fig. 3: ein Diagramm der Temperatur der elektronischen Komponente in Abhängigkeit der Temperatur im Behälter.

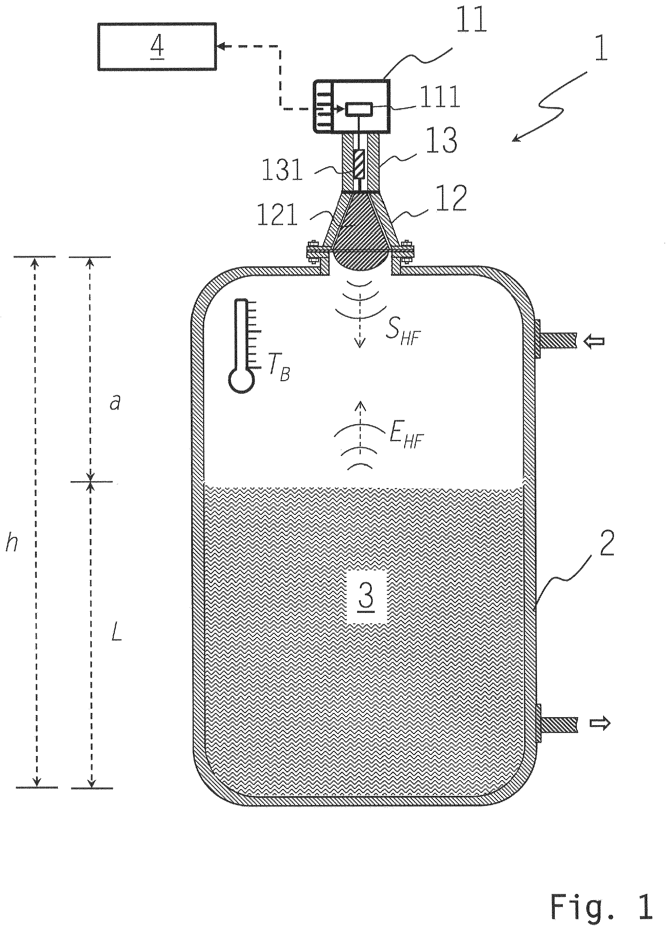

Zu einem verbesserten Verständnis der Erfindung ist in Fig. 1 eine Anordnung eines erfindungsgemäßen Radar-basierten Füllstandsmessgerätes 1 an einem Behälter 2 gezeigt. Im Inneren des Behälters 2 befindet sich ein Füllgut 3, dessen Füllstand L zu bestimmen ist.

Zur Bestimmung des Füllstands L ist das Füllstandsmessgerät 1 in Bezug zum Behälterboden in einer vorbekannten Einbauhöhe h, die je nach Behältergröße bis zu mehr als 30 m hoch sein kann, oberhalb des Füllgutes 5 am Behälter 2 angebracht. Hierzu ist das Füllstandsmessgerät 1 derart mittels einer Flanschverbindung an der Oberseite des Behälters 2 angeordnet, dass es elektromagnetische Wellen $S_{HF}$, die durch eine elektronische Baugruppe 131 erzeugt werden, über eine Antenne 12 in Richtung des Füllgutes 3 aussendet. Dies kann gemäß dem FMCW- oder auch dem Puls-Laufzeit-Verfahren, beispielsweise bei einer Frequenz von 79 GHz oder höher, erfolgen.

Nach Reflektion an der Füllgut-Oberfläche empfängt das Füllstandsmessgerät 1 die reflektierten elektromagnetischen Wellen $E_{HF}$ wieder über die Antenne 12. Dabei ist die vom Füllstandsmessgerät 1 gemessene Laufzeit zwischen Aussenden und Empfangen der hochfrequenten Elektromagnetischen Wellen $S_{HF}$, $E_{HF}$ abhängig von der Entfernung a zur Füllgut-Oberfläche. Die anschließende Berechnung des Füllstandes L aus der Laufzeit bzw. der Entfernung a zur Füllgut-Oberfläche erfolgt durch das Füllstandsmessgerät 3 unter Kenntnis von dessen Einbauhöhe h: L = h - a. Die Berechnung erfolgt durch eine entsprechende Geräte-Elektronik 111 des Feldgerätes 1, die durch ein Gehäuse 11 gekapselt ist.

Das erfindungsgemäße Füllstandsmessgerät 3 kann, wie in Fig. 1 dargestellt, über die Geräte-Elektronik 111 mittels eines Bussystems, etwa "PROFIBUS", "HART" oder "Wireless HART" mit einer übergeordneten Einheit 4, beispielsweise einem Prozessleitsystem, verbunden sein. Hierüber können zum einen Informationen über den Füllstand L übermittelt werden, um gegebenenfalls am Behälter 2 vorhandene Zu- oder Abflüsse zu steuern. Es können aber auch etwaige Informationen über den Betriebszustand des Füllstandsmessgerätes 1 kommuniziert werden.

Innerhalb der Antenne 12 ist eine Prozessdichtung 121, beispielsweise aus einem chemisch inerten Kunststoff, angeordnet, um das Füllstandsmessgerät 1 fluiddicht gegenüber dem Inneren des Behälters 2 abzudichten. Neben der Notwendigkeit einer fluidischen Abdichtung ist es jedoch zudem nötig, das Füllstandsmessgerät 1 vor Temperatureinflüssen aus dem Inneren des Behälters 2 zu schützen:

Je nach Einsatzzweck kann im Inneren des Behälters 2 eine Temperatur $T_B$ von bis zu mehr als 200 °C vorherrschen, beispielsweise aufgrund einer chemischen Reaktion, die das Füllgut 3 momentan durchläuft. Da die elektronischen Komponenten 111, 131 des Feldgerätes 1 in der Regel jedoch nur bis zu einer Temperatur $T_E$ bis ca. 80 ° C ausgelegt sind, umfasst das Feldgerät 1 zu ihrem Schutz vor der thermischen Belastung einen Gehäusehals 13, der zwischen der Antenne 12 und dem Gehäuse 11 angeordnet ist.

Zur Erzielung einer möglichst hohen Auflösung bei der Füllstandsmessung muss die Elektronik-Baugruppe 131 für die Hochfrequenz-Signalerzeugung nahe der Antenne 12 angeordnet sein. Der Grund dafür ist, dass die Einkopplung der elektromagnetischen Wellen $S_{HF}$ im Falle von hohen Sende-/Empfangs-Frequenzen, bspw. bei 79 GHz, die Einkopplung in die Antenne 12 bei einer weiten Entfernung sehr verlustbehaftet ist. Daher ist die Elektronik-Baugruppe 131 nicht im weiter entfernten Gehäuse 11, sondern im näher an der Antenne 12 befindlichen Gehäusehals 13 angeordnet. Um die Elektronik-Baugruppe 131 dennoch vor etwaiger thermischen Belastung aus dem Inneren des Behälters 2 zu schützen, weist der Gehäusehals 13 daher erfindungsgemäß einen derart geringen thermischen Widerstand $R_{th,G}$ auf, dass bei einer Temperatur von mindestens 200 °C im Behälter 2 (bzw. am Ort der Antenne 12) die Temperatur $T_E$ der elektronischen Komponente 131 auf höchstens 80 °C ansteigt.

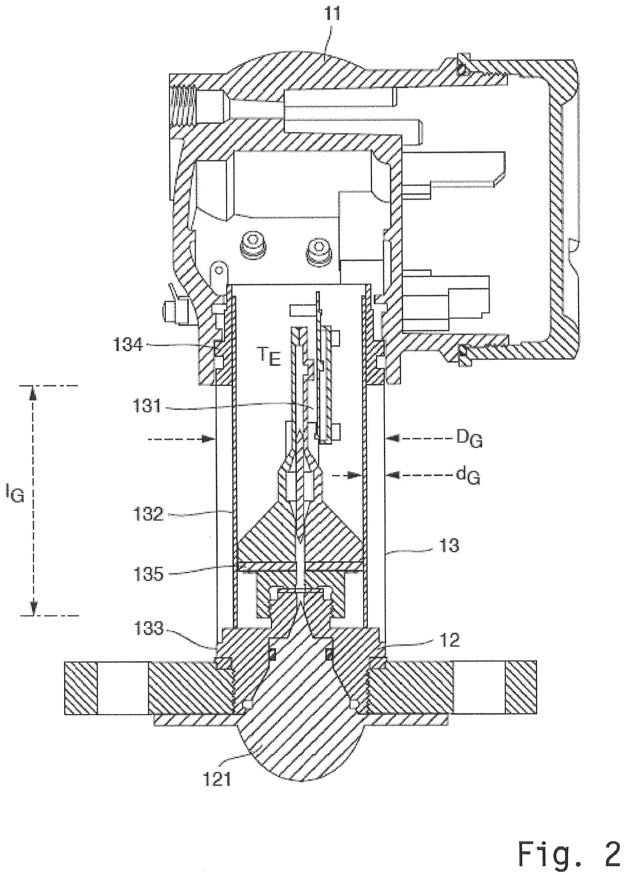

Eine detaillierte Querschnittsansicht des erfindungsgemäßen Füllstandsmessgerätes 1 ist in Fig. 2 gezeigt. In dieser Darstellung werden die Einflussgrößen des thermischen Widerstandes $R_{th,G}$ genauer ersichtlich: Neben dem Material, aus dem der Gehäusehals 13 gefertigt ist, sind dies vor allem die geometrischen Bemessungen des Gehäusehalses 13: Die Länge $I_G$, der Außendurchmesser $D_G$ sowie die Wandstärke $d_G$ des Gehäusehalses 13 (in der gezeigten Darstellung weist der Gehäusehals 13 einen in etwa runden Querschnitt auf).

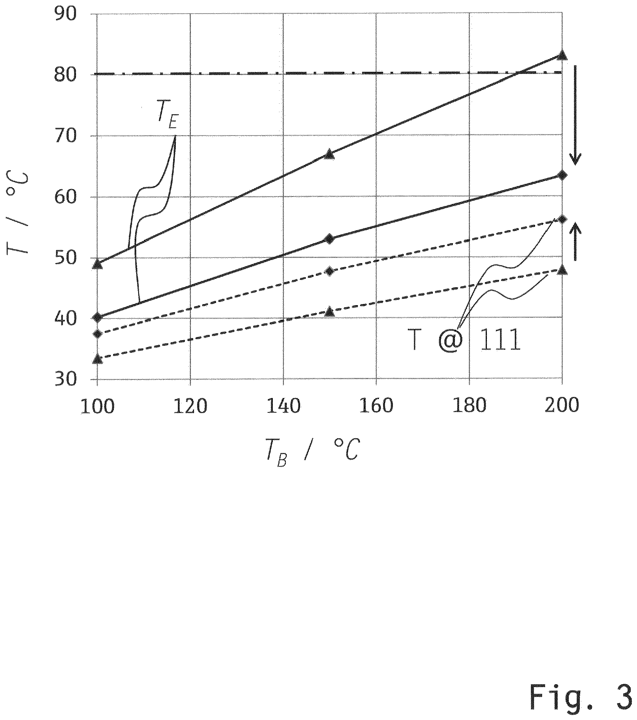

Wie sich beispielsweise eine Änderung der Wandstärke $d_G$ auf den thermischen Widerstand $R_{th,G}$ des Gehäusehalses 13 auswirkt, wird aus dem in Fig. 3 dargestellten Diagramm ersichtlich: Im Falle einer Temperatur von 200 °C im Behälter 2 und einer Erhöhung der Wandstärke $d_G$ von 2 mm auf 5.6 mm (dies entspricht einer Reduktion des thermischen Widerstandes $R_{th,G}$ von ca. 19.04 Kelvin/Watt auf ungefähr 7.13 Kelvin/Watt, die sonstigen Bemessungen bleiben unverändert bei $D_G$

$$\lambda_G = 15 \frac{W}{mK})$$

= 80 mm, $I_G$ = 140 mm, $\lambda_G$ verringert sich die Temperatur $T_E$ an der Elektronik-Baugruppe 131 von ca. 83 °C auf ungefähr 63 °C, welches nunmehr eine unkritische Temperatur für die Elektronik-Baugruppe 131 darstellt. Diesen Simulationswerten liegt die Annahme zugrunde, dass der Gehäusehals 13 bei einer Wandstärke $d_G$ von 5.6 mm zur thermischen Entkopplung der elektronischen Baugruppe 131 zusätzlichen einen 1 mm dicken thermisch isolierenden Einsatz 132 aus PPS an der Innenwand des Gehäusehalses 13 aufweist (siehe Fig. 2). Wie in Fig. 2 dargestellt, wäre es zu diesem Zweck außerdem möglich, im Gehäusehals 13 ein thermisches Isolationselement 135 (bspw. eine entsprechend ausgestaltete Keramik mit einem hohen thermischem Widerstand) zwischen der elektronischen Komponente 131 und der Antenne 12 anzuordnen.

Aus dem Diagramm, das in Fig. 3 dargestellt ist, geht zudem hervor, dass mit der Verringerung des thermischen Widerstandes $R_{th,G}$ eine leichte Erhöhung der Temperatur an der Geräte-Elektronik 111 im Gehäuse 11 einhergeht. Im Sinne der Erfindung kann dies allerdings in Kauf genommen werden, da die Temperatur der Geräte-Elektronik 111 weiterhin deutlich unterhalb von 80 °C verbleibt. Vielmehr wird erfindungsgemäß bewirkt, dass auch die im Gehäusehals 13 befindliche Elektronik-Komponente 131 thermisch vom Behälter derart vom Behälter 2 entkoppelt wird, dass auch bei einer Temperatur von 200 °C im Behälter 2 die Temperatur $T_E$ an der elektronischen Komponente 131 im Gehäusehals 13 unterhalb von 80 ° C verbleibt.

Bezugszeichenliste

| | |
|---|---|
| 1 | Füllstandsmessgerät |
| 2 | Behälter |
| 3 | Füllgut |
| 4 | Übergeordnete Einheit |
| 11 | Gehäuse |
| 12 | Antenne |
| 13 | Gehäusehals |
| 111 | Geräte-Elektronik |
| 121 | Prozessdichtung |
| 131 | Elektronik-Baugruppe |
| 132 | Thermisch isolierende Schicht |
| 133 | Lösbare Verbindung |
| 134 | Lösbare Verbindung |
| 135 | Thermisches Isolationselement |
| $A_G$ | Querschnittsfläche des Gehäusehalses |
| a | Abstand zum Füllgut |
| $D_G$ | Außendurchmesser des Gehäusehalses |
| $d_G$ | Wandstärke des Gehäusehalses |
| $E_{HF}$ | Elektromagnetische Wellen |
| H | Einbauhöhe des Füllstandsmessgerätes |
| L | Füllstand |
| $l_G$ | Länge des Gehäusehalses |
| $R_{th,G}$ | Thermischer Widerstand des Gehäusehalses |
| $T_B$ | Temperatur im Behälter |
| $T_E$ | Temperatur an der Elektronik-Baugruppe |
| $\lambda_G$ | Wärmeleitkoeffizient des Gehäusematerials |

**Patentansprüche**

1. Radar-basiertes Füllstandsmessgerät zur Messung eines Füllstandes (L) eines in einem Behälter (2) befindlichen Füllgutes (3), umfassend

    - Ein Gehäuse (11),
    - eine Antenne (12), die derart ausgestaltet und am Behälter (2) angeordnet ist, um elektromagnetische Wellen ($S_{HF}$) in Richtung des Füllgutes (3) auszusenden und/oder um im Behälter (2) reflektierte elektromagnetische Wellen ($E_{HF}$) zu empfangen,
    - einen Gehäusehals (13), der zwischen dem Gehäuse (11) und der Antenne (12) angeordnet ist, wobei der Gehäusehals (13) zwischen dem Gehäuse (11) und der Antenne (12) einen vordefinierten thermischen Widerstand ($R_{th,G}$) aufweist,
    - zumindest eine teilweise im Gehäusehals (13) angeordnete Elektronik-Baugruppe (131),

    **dadurch gekennzeichnet, dass**
    der thermische Widerstand ($R_{th,G}$) des Gehäusehalses (13) kleiner als 15 Kelvin pro Watt bemessen ist, so dass bei einer Temperatur ($T_B$) im Behälter (2) von mindestens 200° C die Temperatur ($T_E$) an der Elektronik-Baugruppe (131) höchstens 80° C beträgt.

2. Füllstandsmessgerät nach Anspruch 1,
    **dadurch gekennzeichnet, dass**
    der thermische Widerstand ($R_{th,G}$) des Gehäusehalses (13) kleiner als 10 Kelvin pro Watt bemessen ist.

3. Füllstandsmessgerät nach Anspruch 1 oder 2,
    **dadurch gekennzeichnet, dass**
    der Gehäusehals (13) aus einem thermisch leitfähigen Material, insbesondere aus Edelstahl, Aluminium oder Kupfer gefertigt ist.

4. Füllstandsmessgerät nach zumindest einem der vorhergehenden Ansprüche,
    **dadurch gekennzeichnet, dass**
    der Gehäusehals (13) einen in etwa runden Querschnitt aufweist.

5. Füllstandsmessgerät nach Anspruch 4,
    **dadurch gekennzeichnet, dass**
    der Gehäusehals (13) für den Fall, dass der Gehäusehals (13) aus Edelstahl gefertigt ist, eine mittlere minimale Wandstärke ($d_G$) von 4 mm aufweist.

6. Füllstandsmessgerät nach Anspruch 4 oder 5,
    **dadurch gekennzeichnet, dass**
    der Gehäusehals (13) für den Fall, dass der Gehäusehals (13) aus Edelstahl gefertigt ist, einen maximalen mittleren Außendurchmesser ($D_G$) von 80 mm aufweist.

**7.** Füllstandsmessgerät nach einem oder mehreren der Ansprüche 4 bis 6, **dadurch gekennzeichnet, dass** der Gehäusehals (13) für den Fall, dass der Gehäusehals (13) aus Edelstahl gefertigt ist, eine maximale Länge ($l_G$) von 140 mm aufweist.

**8.** Füllstandsmessgerät nach zumindest einem der vorhergehenden Ansprüche, **dadurch gekennzeichnet, dass** der Gehäusehals (13) eine Innenwand mit einer thermisch isolierenden Schicht (132), insbesondere aus Polyphenylensulfid, aufweist.

**9.** Füllstandsmessgerät nach zumindest einem der vorhergehenden Ansprüche, **dadurch gekennzeichnet, dass** die Antenne (12) und/oder das Gehäuse (11) über zumindest eine lösbare Verbindung (133, 134) mit dem Gehäusehals (13) verbunden sind/ist.

**10.** Füllstandsmessgerät nach Anspruch 9, **dadurch gekennzeichnet, dass** eine Wärmeleitpaste an der zumindest einen lösbaren Verbindung (133, 134) vorgesehen ist.

**11.** Füllstandsmessgerät nach zumindest einem der vorhergehenden Ansprüche, **dadurch gekennzeichnet, dass** im Gehäusehals (13) zwischen der Elektronik-Baugruppe (131) und der Antenne (12) ein thermisches Isolationselement (135) angeordnet ist.

**Claims**

**1.** Radar-based level transmitter, designed to measure a level (L) of a medium (3) located in a vessel (2), comprising

- a housing (11),
- an antenna (12), which is designed and arranged on the vessel (2) in such a way to transmit electromagnetic waves ($S_{HF}$) in the direction of the medium (3) and/or to receive electromagnetic waves ($E_{HF}$) reflected in the vessel (2),
- a housing neck (13), which is arranged between the housing (11) and the antenna (12), wherein the housing neck (13) has a predefined thermal resistance ($R_{th,G}$) between the housing (11) and the antenna (12),
- at least an electronics assembly (131) partially arranged in the housing neck (13),

**characterized in that** the thermal resistance ($R_{th,G}$) of the housing neck (13) is sized in such a way to be less than 15 Kelvin per Watt such that at a temperature ($T_B$) in the vessel (2) of at least 200 °C, the temperature ($T_E$) at the electronics assembly (131) is at maximum 80 °C.

**2.** Level transmitter as claimed in Claim 1, **characterized in that** the thermal resistance ($R_{th,G}$) of the housing neck (13) is sized to be less than 10 Kelvin per Watt.

**3.** Level transmitter as claimed in Claim 1 or 2, **characterized in that** the housing neck (13) is made from a thermally conductive material, particularly stainless steel, aluminum or copper.

**4.** Level transmitter as claimed in at least one of the previous claims, **characterized in that** the housing neck (13) has a cross-section that is approximately round.

**5.** Level transmitter as claimed in Claim 4, **characterized in that** the housing neck (13) has an average minimum wall thickness ($d_G$) of 4 mm in the event that the housing neck (13) is made from stainless steel.

**6.** Level transmitter as claimed in Claim 4 or 5, **characterized in that** the housing neck (13) has a maximum average outer diameter ($D_G$) of 80 mm in the event that the housing neck (13) is made of stainless steel.

**7.** Level transmitter as claimed in one or more of the Claims 4 to 6, **characterized in that** the housing neck (13) has a maximum length ($l_G$) of 140 mm in the event that the housing neck (13) is made of stainless steel.

**8.** Level transmitter as claimed in at least one of the previous claims, **characterized in that** the housing neck (13) has an interior wall with an insulating thermal layer (132), particularly made of polyphenylene sulfide.

**9.** Level transmitter as claimed in at least one of the previous claims, **characterized in that** the antenna (12) and/or the housing (11) is/are connected to the housing neck (13) via at least a detachable connection (133, 134).

**10.** Level transmitter as claimed in Claim 9, **characterized in that** a heat transfer paste is provided at the at least one detachable connection (133, 134).

**11.** Level transmitter as claimed in at least one of the previous claims, **characterized in that** a thermal isolation element (135) is arranged in the housing neck (13) between the electronics assembly (131) and the antenna (12).

**Revendications**

**1.** Transmetteur de niveau basé sur un radar, lequel transmetteur est destiné à la mesure d'un niveau (L) dans un produit (3) se trouvant dans un réservoir (2), comprenant

- un boîtier (11),
- une antenne (12), laquelle est conçue et disposée sur le réservoir (2) de manière à émettre des ondes électromagnétiques ($S_{HF}$) en direction du produit (3) et/ou à recevoir des ondes électromagnétiques ($E_{HF}$) réfléchies dans le réservoir (2),
- un col de boîtier (13), qui est disposé entre le boîtier (11) et l'antenne (12), le col de boîtier (13) présentant une résistance thermique ($R_{th,G}$) prédéfinie entre le boîtier (11) et l'antenne (12),
- au moins un module électronique (131) disposé partiellement dans le col de boîtier (13),

**caractérisé en ce que** la résistance thermique ($R_{th,G}$) du col de boîtier (13) est dimensionnée de manière à être inférieure à 15 Kelvin par Watt, de sorte qu'à une température ($T_B$) à l'intérieur du réservoir (2) d'au moins 200 °C, la température ($T_E$) au niveau du module électronique (131) est au maximum de 80 °C.

**2.** Transmetteur de niveau selon la revendication 1, **caractérisé en ce** **que** la résistance thermique ($R_{th,G}$) du col de boîtier (13) est dimensionnée pour être inférieure à 10 Kelvin par Watt.

**3.** Transmetteur de niveau selon la revendication 1 ou 2, **caractérisé en ce** **que** le col de boîtier (13) est constitué d'un matériau thermoconducteur, notamment d'acier inoxydable, d'aluminium ou de cuivre.

**4.** Transmetteur de niveau selon au moins l'une des revendications précédentes, **caractérisé en ce** **que** le col de boîtier (13) présente une section transversale approximativement ronde.

**5.** Transmetteur de niveau selon la revendication 4, **caractérisé en ce** **que** le col de boîtier (13) présente une épaisseur de paroi moyenne minimale ($d_G$) de 4 mm dans le cas où le col de boîtier (13) est en acier inoxydable.

**6.** Transmetteur de niveau selon la revendication 4 ou 5, **caractérisé en ce** **que** le col de boîtier (13) présente un diamètre extérieur moyen maximal ($D_G$) de 80 mm dans le cas où le col de boîtier (13) est en acier inoxydable.

**7.** Transmetteur de niveau selon l'une ou plusieurs des revendications 4 à 6, **caractérisé en ce** **que** le col de boîtier (13) présente une longueur maximale ($l_G$) de 140 mm dans le cas où le col de boîtier (13) est en acier inoxydable.

**8.** Transmetteur de niveau selon au moins l'une des revendications précédentes, **caractérisé en ce** **que** le col de boîtier (13) présente une paroi intérieure avec une couche thermiquement isolante (132), notamment en sulfure de polyphénylène.

**9.** Transmetteur de niveau selon au moins l'une des revendications précédentes, **caractérisé en ce** **que** l'antenne (12) et/ou le boîtier (11) est/sont relié(s) au col de boîtier (13) par l'intermédiaire d'au moins une connexion détachable (133, 134).

**10.** Transmetteur de niveau selon la revendication 9, **caractérisé en ce** **qu'**une pâte thermique est prévue sur l'au moins une connexion détachable (133, 134).

**11.** Transmetteur de niveau selon au moins l'une des revendications précédentes, **caractérisé en ce** **qu'**un élément d'isolation thermique (135) est disposé dans le col de boîtier (13), entre le module électronique (131) et l'antenne (12).

Fig. 1

Fig. 2

Fig. 3

**IN DER BESCHREIBUNG AUFGEFÜHRTE DOKUMENTE**

**In der Beschreibung aufgeführte Patentdokumente**

- DE 102010063430 A1
- WO 2012139852 A1
- DE 102009028620 A1